# EUROPEAN PATENT APPLICATION

(11) **EP 2 182 440 A1**
(43) Date of publication of application: **05.05.2010**
(21) Application number: 08168078.7
(22) Date of filing: 31.10.2008
(51) Int. Cl.: G06F 9/50

(54) **Method and apparatus for service discovery**

(71) Applicant: NTT DoCoMo, Inc., Tokyo (JP)
(72) Inventor: Paolucci, Massimo, Munich (DE); Kerhet, Volha, Minsk (BY); Kazahmiakin, Raman, 38100, Trento (IT)
(74) Representative: Betten & Resch

(57) **Abstract**

A computer implemented method for detecting for a certain data object the services which can use said data object as an input, wherein said method comprises:
providing a taxonomy of types, said taxonomy being hierarchical such that a type can have supertypes and subtypes;
receiving a data object having a type belonging to said taxonomy, said data object further having one ore more attributes as components of said data object, said attributes also being of a type which belongs to said taxonomy;
obtaining the data type of said data object and the data type of said one or more attributes and compiling them in a list of associated types which are associated with said data object;
for all of the types in said list of associated types, obtaining the services which can operate on said types to obtain a list of services which can operate on the inputted data.

## Description

### FIELD OF THE INVENTION

The present invention relates to a method and an apparatus for discovering services which can operate on a given piece of data. It further relates to a method and an apparatus for discovering data which can be used by a given service.

### BACKGROUND OF THE INVENTION

Mobile phones are increasingly targets of services that can help the user to navigate their own life. Such services range from parking payment, to navigation assistance on public transport to entertainment and socialization. But while the user may have many available services, in reality these services do not interact with each other therefore if a user may desire to use public transport to go to a given appointment, it is very difficult if not impossible to associate the public transport service with the appointment, and even more difficult to use such a service in conjunction with the appointment.

It is therefore desirable to have a mechanism which is capable to tell the user which services can be used in connection to some given data such as an appointment. This means that such a mechanism should be able to perform service discovery based on some given data object.

Current solutions to the problem of service discovery concentrate on matching a service request against a service provision along three dimensions: (1) the input/output signature of the service; (2) the precondition/effect consequence of the service; and (3) the so called "non functional parameters".
The input/output signature of the service specifies the correspondence between the information that is received from the service and the information that is generated.
The solutions that exploit (1) are based on a paper by Paolucci et al. (see Massimo Paolucci, Takahiro Kawamura, T. R. Payne, and K. Sycara, "Semantic Matching of Web Services Capabilities," in Proceedings of the 1st International Semantic Web Conference (ISWC2002)) which was a development of work by Sycara et al. (see Katia Sycara, Seth Widoff, Matthias Klusch and Jianguo Lu, "LARKS: Dynamic Matchmaking Among Heterogeneous Software Agents in Cyberspace." Autonomous Agents and Multi-Agent Systems, 5, 173-203, 2002) and Zaremsky et al. (see Amy Moormann Zaremski, and Jeannette M. Wing; "Specification matching of software components"; ACM Transactions on Software Engineering and Methodology (TOSEM), Volume 6 Issue 4; October 1997). These works propose algorithms to derive the matching between two services using as constraints only the inputs and outputs of the services, as well as possibly additional constraints. They do not solve the problem of discovering services based on a data object because they attempt to answer the question of how to match the capabilities of a service against a prototype of the desired service, but not the question which set of services can be used in conjunction with a given piece of data. The difference between this prior art and the present invention (which will be described later) is striking when looked at in conjunction with a data object such as an "appointment". While an appointment has multiple components (such as time and location), it is neither one of them specifically. Therefore, although an appointment can be associated to a specific location, it is not a location, and using prior art approaches it will therefore not be recognized as a possible input for navigation services. Similarly, it will fail to be recognized as an input to social services even though it is associated with people to meet. Ultimately, the prior art would fail to associate navigation services or social services to the appointment object.

The problem of discovery algorithms that are based on the I/O signature is that they fail to analyze the different components of the inputs and outputs independently, and restrict themselves to take the data object in its entirety. Alternative solutions in this direction, such as Klutch et al. (see Klusch, M.; Fries, B.; Sycara, K. (2006): Automated Semantic Web Service Discovery with OWLS-MX. Proceedings of 5th International Conference on Autonomous Agents and Multi-Agent Systems (AAMAS), Hakodate, Japan, ACM Press) propose a different way to derive the match, but essentially face the same problem.

The solutions that exploit the preconditions and effects of a service, such as disclosed in Kaarthik Sivashanmugam, Kunal Verma, Amit Sheth, John Miller; Adding Semantics to Web Services Standards; The 2003 International Conference on Web Services (ICWS'03); 2003, concentrate on the transformation produced by the service. They have two types of problems: the first is that, by and large, they rely on the I/O matching as initial filter. As shown above, I/O matching as filter of course fails to recognize the different components of a service and as a consequence which services can be used in conjunction with a given piece of data. The second, and more fundamental problem, is that precondition/effect matching is a refinement of the problem of matching service capabilities against a prototype of the desired capabilities, which is essentially orthogonal to the problem to be solved by the present invention where no prototype is provided. The third problem is that this type of matching targets with the type of transformation that is produced by the service, rather than the information that can be processed by the service. For example, a precondition may specify that a service can be used only if the user has some special permission, as in the case of calendars that are restricted to a limited number of users, and the effect is that the some properties are attached to the user, such as a commitment to participate in a meeting. Yet, neither the permissions to use the calendar, nor the commitment that result from it are properties of the appointment and they cannot use to identify that the calendar may be used to record the event.

Solutions that exploit "non-functional" parameters, such as e.g. Mohamed Hamdy, Birgitta König-Ries, Ulrich Küster; "Non-functional Parameters as First Class Citizens in Service Description and Matchmaking - An Integrated Approach"; in Proceedings of the first "Non Functional Properties and Service Level Agreements in Service Oriented Computing" Workshop (NFPSLA-SOC 2007), Vienna, Austria, September 2007, address problems such as the quality of the service provided. Non-functional parameters include the cost of a service, its speed and others. They are qualities about the function provided by the service, but they do not say anything about the function provided. As such they do not address the problem of finding which service can be found that processes a given piece of information such as an appointment.

Outside the field of service oriented computing there are other ways in which service, and more general computer functions, are associated to data. The first one is the fixed association between some features of the data and the application. In this case essentially the discovery procedure is reduced to a lookup in a two-columns table in which one column is used to list the features of the data and the other the corresponding applications. The most common use case of such a fixed association is the use of file extensions, more specifically Mime types, to applications that is performed by operating systems, e-mail readers, as well as browsers among the other systems. The association of Mime types and applications is performed by defining a table that specifies which applications can be used in correspondence with given type. Such a correspondence may for example specify that all files ending with ".doc" should be open by the application "Microsoft Word", while all file with extension ".odt" should be open by the application "OpenOffice". Furthermore, in general it is possible to associate multiple applications to the same Mime type, for example ".doc" may be associated to both "Microsoft Word" and "OpenOffice" in which case the discovery system will have to employ a disambiguation procedure or ask the user for the best selection. Although the association between Mime types and applications successfully associates applications and file types, it has major shortcomings, which will be described later in connection with embodiments of the invention.

### SUMMARY OF THE INVENTION

According to one embodiment there is provided a computer implemented method for detecting for a certain data object the services which can use said data object as an input, wherein said method comprises:
providing a taxonomy of types, said taxonomy being hierarchical such that a type can have supertypes and subtypes;
receiving a data object having a type belonging to said taxonomy, said data object further having one or more attributes as components of said data object, said attributes also being of a type which belongs to said taxonomy;
obtaining the data type of said data object and the data type of said one or more attributes and compiling them in a list of associated types which are associated with said data object;
for all of the types in said list of associated types, obtaining the services which can operate on said types to obtain a list of services which can operate on the inputted data.

The taxonomy provides a scheme which can be used for searching, and the obtaining of the associated types enables the search to be performed not only based on the type of the data object itself but also based on its "content" on which also services may operate. In this way the service discovery is broadened in scope compared to classical techniques.

According to one embodiment the method further comprises:
for all data types in the list of associated types, find their corresponding supertypes in the taxonomy and their associated services to add them to the resulting list of services.

Including the supertypes in the search leads to services which can operate on those supertypes, and since they may as well operate on the data object on which the discovery is based, this broadens the scope and the result of detected services.

According to one embodiment the method further comprises:
for all data types in the list of associated types, find their corresponding subtypes in the taxonomy and their associated services to add them to the resulting list of services.

Similarly to including the supertypes, including the subtypes in the search leads to services which can operate on those subtypes, and since they may as well operate on the data object on which the discovery is based, this broadens the scope and the result of detected services.

According to one embodiment the method further comprises:
apply a filtering function to the found services which checks whether for the found service the data can indeed be an input, and if not, remove the corresponding service from the resulting services list.

The filtering may reduce the result list by removing those services which have been found in the discovery process but which in fact cannot operate on the data object on which the search was based.

According to one embodiment there is provided a computer implemented method for detecting for a certain service those stored data objects which can be used by said service as an input, wherein said method comprises:
for each of the the one or more types of data for which said service is declared, finding their set of associated data objects, wherein finding the associated data objects comprises:
   finding those data objects among the stored data which have as an attribute at least one of the data types or the instance of a data type for which the service is declared, an attribute being a component of a stored data object; said method further comprising:
      adding the found data objects to the result set of data objects which can be used as an input by said service.

This enables the search for those data objects on which a given service may operate or which a given service may use as an input.

According to one embodiment the method further comprises:
for all data types for which the service is declared" find their corresponding supertypes in the taxonomy, and
for each of the sound supertypes, find its set of associated data objects and add it to the result list.

Extending the search to the supertypes increases the possible result set of data objects which can be used as an input of the service.

According to one embodiment the method further comprises:
for all data types for which the service is declared, find their corresponding subtypes in the taxonomy, and for each of the sound subtypes, find its set of associated data objects and add it to the result list.

Extending the search to the subtypes increases the possible result set of data objects which can be used as an input of the service.

According to one embodiment the method further comprises:
applying a filtering function to the found data objects which checks whether for the given service the found data objects can indeed be an input, and if not, do not include the corresponding data objects in the resulting data objects list.
   The filtering function ensures that only those data objects which can indeed be used as an input by the given service are included in the result list.

According to one embodiment there is provided an apparatus for detecting for a certain data object the services which can use said data object as an input, wherein said apparatus comprises:
a module for providing a taxonomy of types, said taxonomy being hierarchical such that a type can have supertypes and subtypes;
a module for receiving a data object having a type belonging to said taxonomy, said data object further having one ore more attributes as components of said data object, said attributes also being of a type which belongs to said taxonomy;
a module for obtaining the data type of said data object and the data type of said one or more attributes and compiling them in a list of associated types which are associated with said data object;
a module for obtaining for all of the types in said list of associated types the services which can operate on said types to obtain a list of services which can operate on the inputted data.

In this manner an apparatus for performing a service discovery based on a given data object can be implemented.

According to one embodiment there is provided an apparatus for detecting for a certain service the data objects which can be used by said service as an input, wherein said apparatus comprises:
a module for providing a taxonomy of types, said taxonomy being hierarchical such that a type can have supertypes and subtypes, wherein a plurality of data objects are stored on said computer and said data object further having one ore more attributes as components of said data objects, said attributes also being of a type which belongs to said taxonomy; said apparatus further comprising:
   a module for obtaining for all data objects stored on said computer the data type of said data objects and the data type of the one or more attributes of the objects which are components of said objects, to obtain a set of associated data types;
   a module for compiling said associated set of data types as a result set of data objects which can be used by said service.

In this manner an apparatus for performing a data object discovery based on a given service can be implemented.

According to one embodiment there is provided an apparatus comprising a module for implementing a method according to an embodiment of the invention.

According to one embodiment there is provided A computer program comprising computer program code which when being executed on a computer enables said computer to carry out a method according to an embodiment of the invention.

### DESCRIPTION OF THE DRAWINGS

Fig. 1 schematically illustrates the operation of an embodiment according to the invention.
Fig. 2 is a flowchart which schematically illustrates the operation of an embodiment of the invention.
Fig. 3 is a flowchart which schematically illustrates the operation of a further embodiment of the invention.
Fig. 4 is a flowchart which schematically illustrates the operation of a further embodiment of the invention.

### DETAILED DESCRIPTION

In the following the invention will be described by means of exemplary embodiments.

Embodiments of the invention are directed to discover services which can make use of a certain piece of data (a data object) once it has been received by the computing apparatus. The computing apparatus may be any computer such as a PC or a PDA, however, according to one embodiment it is a mobile phone or a mobile terminal or a smartphone. In the following the explanation will be made for the case of a mobile device, however, it is to be understood that the apparatus may also be any other computing apparatus.

The mobile device may receive any data object, e.g. by email or SMS, or by any other means, and the mechanism according to an embodiment of the invention will then discover the services which can use this data object.

In order to match the user data with the available services, in one embodiment each piece of information is organized along one or more different dimensions, and each service may address one or more of these dimensions. As an example, an appointment has a time component, or a location component, or a social component indicating who will participate in the event, or a value component indicating costs and so on.

One may therefore say that the data object received by the mobile device has itself is of a certain type (e.g. of the type "appointment"), and the data object comprises one or more individual components which are of a type different that the type of the object itself. These components may assume a certain "value", such as e.g. the component "time" which is of the type "time" may assume the value "9:30 am".

The components of the data object may in the following also be referred to as "attributes" of the data object. As explained, the "attribute" or "attributes" of a data object may be of a certain type and may assume a certain data value.

On the bases of the components or attributes of a data object, different services can apply to the data object. Assume that the data object is of the type "appointment", then calendars may make use of the time part (the time component) of the data object, navigation services may use the location part, a service like a "contact list" may be applied to the social part, and a service like an e-wallet may be applied to the (monetary) value component of the data object being of the type "appointment".

In one embodiment which will be explained in somewhat more detail later the mechanism look for services that address the different components of the data object.

On the processing side, matching can be performed in two modes depending whether it is initiated from the data or whether it is initiated from the service. In the first case (or one embodiment), upon receiving some data the mobile phone (and more generally the computational device) associates services to the data. In the second embodiment, the service initiated mode, whenever a new service becomes available it is associated automatically to the data. This is a case when the user, and the mobile phone as consequence, enters a new environment in which a new service is provided. An example of such a service is the gate-information service at the Manchester airport. Upon entering the airport the mobile phone should associate the service to the flight ticket.

Of course according to one embodiment both mechanisms may be implemented together.

In the embodiments described in the following it is assumed that data is organized in a type taxonomy like they type taxonomy in object oriented programming or in ontology specifications. This means that a data object and its components are of a type belonging to this taxonomy.

To implement this taxonomy according to one embodiment one may assume the existence of two relations SubType and SuperType that relate a type to its direct subtypes and supertypes. For the purposes of this embodiment, one may give a set theoretic interpretation to the type system, where a type is defined as a set of data instances, the subtype relation is interpreted as the subset relation between two sets. Type systems may have also additional features such as multiple inheritance, type union, intersection and complement as well as other constraints on the types. Whereas these additional features may improve the results of the mechanism, they are not strictly needed. More formally, let *T* be the set of types, one may define the following two relations: SuperType: *T*X*T* which maps a type to its direct super-types, meaning that SuperType(*t*,*u*) holds for when t is a direct super-type of u and equivalently one may define SubType: *T*X*T* which maps a type to its direct sub-types. Formally, "direct" means that the super-types are found cannot be themselves in a super-type relation, and equivalently for sub-types.

The invention according to one embodiment makes use of this taxonomy by finding for a given data type its subtypes and its supertypes. This will now be explained in somewhat more detail.

For ease of presentation, one may define two functions: SuperTypes: *T*→2*^{T}* and subTypes: *T*→2^{T}, where 2*^{T}* is the powerset (set of sets) of types, that given a type finds all its super-types and sub-types respectively. One may note that for these two functions there is not imposed the direct restriction, therefore they will find all super-types up to the root of the taxonomy; and equivalently all the subtypes to the bottom of the taxonomy. These two functions can be defined straightforwardly from the two relations SuperType and SubType in the following way:

### Definition 1: Definition of superTypes and subTypes functions

| | |
|---|---|
| *1.* | ∀*t,u*∈ *T u*∈ superTypes(*t*)⇔ |
| (SuperType (*u,t*) ∨ (∃*s*∈ SuperType (*s,t*) ∧*u*∈superTypes(*s*))) | |
| 2. | ∀*t,u*∈ *T u*∈ subTypes(*t*) ⇔ |
| (SubType (*u,t*) ∨ (∃*s*∈SubType (*s,t*) ∧*u*∈ subTypes(*s*))) | |

Expressed in plain words, the functions superTypes and subTypes return for a given input type all supertypes of the inputted type up to the root of the taxonomy and all subtypes of the inputted type down to the leaves of the taxonomy.

In addition to the Super/SubType relation, types can also be related by *attribute* relations. For example, there may be a relation *at* between the type *Appointment* and the type *Location*, and the relation start_time between *Appoíntment* and *Time*.

In the following there will be described how according to one embodiment the supertypes function may be implemented. In pseudo-code the procedure would be the following

Let SuperTypes be a hashtable whose keys are the types and values are the supertypes. (this is a possible representation of the SuperType relations)

```
 set superTypes (type) {
 // create a storage varialbe S that will contain all supertypes
 set S=()
 // compute the direct supertypes by extracting them from the table.
 // the getValues function extracts values from tables and it is expected to be
 native, therefore we do not need to define it.
 set T= SuperType.getValues(s);
 // analyze all the supertypes to extract their supertypes
 for all t in T {
 // recursive call to collect all supertypes of a found type
 U= superTypes(t);
 // the append function below is expected to be a native function of sets
 // furthermore the append function is expected to remove duplicates.
 S=S.append(U);
 }
 // return all types found
 return S
 }
```

And similarly for a concrete implementation of the subtypes function:

Let SubTypes be a hashtable whose keys are the types and values are the supertypes. (this is a possible representation of the SubType relations)

```
 set subTypes (type) {
 // create a storage varialbe S that will contain all supertypes
 set S=()
 // compute the direct subtypes by extracting them from the table.
 // the getValues function extracts values from tables and it is expected to be
 native, therefore we do not need to define it.
 set T= SubType.getValues(s);
 // analyze all the subtypes to extract their subtypes
 for all t in T {
 // recursive call to collect all subypes of a found type
 U= subTypes(t);
 // the append function below is expected to be a native function of sets
 // furthermore the append function is expected to remove duplicates.
 S=S.append(U);
 }
 // return all types found
 return S
 }
```

The data objects on which the embodiments of the invention operate belong to the taxonomy described before, i.e. they are of a type which belongs to this taxonomy. This will now be explained in somewhat more detail.

By interacting with other people and services, mobile phones acquire data (or data objects) that are classified on the bases of the class taxonomy described above. Such data may be expressed as a data object of a given type (belonging to the taxonomy) with one or more different attributes. The attributes may be components of the data object, and they also in one embodiment belong to he type taxonomy. Formally one may define a relation type_of : Dx*T* which maps data objects (i.e. objects belonging to the set of data D) to their direct types in *T*. Here again *direct* means that for a given data d if t₁ and t₂ are the types of d, then they cannot be in a super-type relation.

Furthermore each data item is also represented as a tuple in which each element of the tuple corresponds to an attribute of the type of the data. For example, an appointment *app* may be defined by the tuple <*l,t,p,a,c*> where *l* specifies the location of the appointment, *t* the time of the appointment, *p* the people to meet at the appointment, *a* the activity to be performed there, and *c*the costs related to the appointment. In turn all the elements of the tuple will have to be of a type defined in the shared type system (the taxonomy).

In other words, the data object has a certain type and it has further components (attributes) which are also of a certain type, and the types belong to the taxonomy.

For a given data object and its components there may be defined relation type_of which returns the type of the data object or its components, respectively.

In addition to the relation type_of, one may assume a classification function, called classify, that for given a piece of data (a data object) d reports the type to which it is related through the type_of relation. The computation of the classify function depends on the framework in which the mechanism is implemented. In object oriented programming the type of some data is explicitly defined at the time of data creation; in logic-based frameworks, such as Description Logic (see e.g. F. Baader, D. Calvanese, D. McGuinness, D. Nardi and P. Patel-Schneider; "The Description Logic Handbook; Theory, Implementation and Applications" Cambridge University Press, 2003) based frameworks, the classify function may be provided as a form of automatic inference.

A skilled person can implement without difficulties a function "classify" which returns the type of data for a given data object.

Finally, we can define two functions: hasAttributes and attributes which detect if the data has any attribute, and that extract the data attributes respectively. The skilled person will find these functions already implemented in the support for the language used to implement the system. In general every type system has a way to access the attributes of data items. For example if a type Appointment has attributes time, location, people. then any appointment data app will retrieve its attributes e.g. through app.time, app.location and app.people.

In addition to the classification function defined above, one may according to one embodiment also require an *association* relation between data and types. Specifically, a data instance *d* of the form *d*=<*k*₁,...,*k*ₙ> can be associated to a set of types *A*=associate(*d*) ⊆ *T* if and only if the following conditions hold:

### Definition 2: Definition of the associate function

| | |
|---|---|
| *1.* | ∀*t* ∈ classify(*d*) ⇒ *t* ∈ *A* |
| 2. | *if d*=<*kₗ*,..,*kₙ*,>, ∀*kᵢ* ∈ *{kₗ*,...,*kₙ}* ∧ ∀*t* ∈ associate(*kᵢ*) ⇒ *t* ∈ *A* |

The first condition specifies that a data instance *d* is associated with its own types; the second condition specifies that if a data instance is a tuple, then the data is associated with all the types to which the elements of the tuple are associated.

The definition above also defines the algorithm to compute the associate function through a recursive procedure: first the procedure computes the classification of the data; second, it extracts all the attributes of the data; and third, it computes the association of each of the attributes

As an example of the association consider the appointment *app* defined as a tuple *app*=*<l,t,p,a,c>*, than associate(*app*)⊆{*Appointment, Location, Time, Peoople, Activity, Cost*}. Note that the subset relation has been used because the associate function is recursive therefore depending on the definition of *Location, Time, People, Activity* and *Cost* it may introduce other types in the set. The example also highlights the difference between the classification and association. The appointment is by no means a person, so it cannot be classified as belonging to the type such *People*, but it is associated with such type; equivalently, an appointment is not a location or an instance of time, but it can be associated with those concepts anyway.

In plain words one may say that the association function returns for a given data object a set of types, where the returned set of types include the types of the data object itself and further the types of its attributes or components. The classification function, on the other hand, returns for a given inputted data object the type or the types of this data object itself.

One may also see the whole process as a recursive process which at first for a data object returns the type, then it looks at the attributes of the type and returns their type, then for the thus returned types (of the attributes) it is again looked which attributes they have (if any), and again their types are returned and added to the set of associated types. This recursive procedure repeats until it reaches types which themselves have no further attributes.

A concrete implementation example for the associate function in pseudocode is given in the following.

```
 set associate (data) {
 // create a storage variable to contain all the associated types
 set A=()
 // extract all types of data and add them to A
 set T=classify(data)
 A=T
 // check whether the data has any attribute
 if (hasAttributes(data)) {
 // attributes have been found, recursively apply the associate function to all of
 them
 for all a in attributes(data) {
 // find all types associated to the attribute
 set U= associate(a);
 // appends the type found to A removing all duplicates
 A= A.append(U)
 }
 // return the set of associated types
 return A
```

In the following service advertisements according to one embodiment will be described.

Services advertise themselves to mobile phones by specifying for which type of data a mobile user would use such service. For example, a navigation system may be related to data types such as *Location* or *Route*. Such a specification means that the service can be used in conjunction with all data that is of type *Location* or of type *Route*. Furthermore, consistently with the granularity of the data available other restrictions can be expressed. For example, a navigation system that is restricted to a given environment, such as for example a shopping mall (*SMₗ*) could specify that it handles all data of type *SMₗ*∈*subTypes(Location)*. In this case *SMₗ* may indicate different locations in the shopping mall, such as stores, meeting points, food courts and so on.

Formally one may define a relation USE:*S*x*T* that maps services to types to specify for which types of data a service may be used. Continuing on the example above, a mall navigation system *mallNav* that is used in conjunction with locations in a given mall would advertise itself by the formula: (*mallNav* USE *SM*)*₁*. About the definition of USE, it should be noted that a service is not necessarily related to only a single type through the USE relation. Instead it is possible to specify multiple use statements for each service.

According to one embodiment a service which is implemented by or offered on a mobile device advertises itself by a statement indicating which types of data it can operate on, as described before. Using this advertisement it is then for a given data type possible to determine which services can operate on this data type, e.g. by looking up all use statements and checking whether the data type in question is mentioned in them. As an alternative, the system may build and maintain a lookup table based on the service advertisements which enables a quick lookup for checking which services can operate on a certain data type.

Using the elements and operations described before, namely the type taxonomy, the data object with a type and its one or more attributes belonging to the taxonomy, the classify function for returning the type of a data object, the associate function for returning the set of types associated with a data object, and the use statements advertised by a service, it becomes possible to implement a discovery mechanism according to an embodiment described below. The discovery mechanism in some sense is a matching process which detects which services match with a certain data object.

In one embodiment the matching process has two directions: the first one starting from the data to find the services that can be used in conjunction with that data; the second one, starting from the services to find the data that can be applied to. Both, however, are independent and may be implemented independently of each other. At first the mechanism for discovering services based on a given data object will be described.

This first type of matching from the data to the services according to one embodiment is based on the following algorithm:

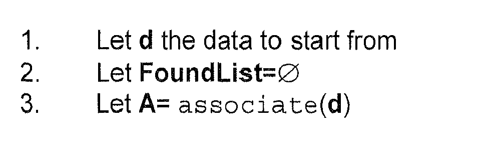

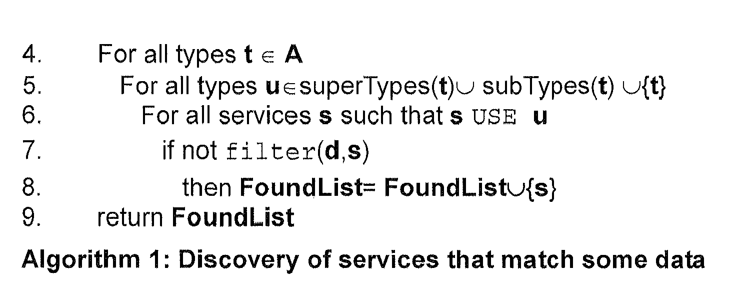

The algorithm is essentially a search across the taxonomy of types to find all services that can be utilized in conjunction with some given data. More precisely, Line 1 specifies the data object that is the input parameter, while lines 2 specify a variable to store the services found (**FoundList**). Line 3 specify a variable A to collect the set of types from which to start the search, these are the types that are associated to the data **d** as described in Definition 2. Line 4 triggers the search through all associated types, while line 5 defines the direction of the search through the type hierarchy. Line 6 selects all services that can be used to process data of type u; line 7 (which is optional) applies filters that can weed out services on the bases of different criteria, one such type of filter will be explained below; and finally line 9 returns the list of services found.

It is easy to see that the algorithm always terminate when there is a finite set of types, since in the worse case all of them will need to be checked and none of them is checked more than once.

With this algorithm which can be implemented on a computer or any similar device it is possible to discover the services which can be used in connection with a given piece of data (a data object).

Now there will be described second algorithm according to a further embodiment for finding the pieces of data based on a given service.

The second type of matching, which is shown in details by the Algorithm 2, maps a service to the data following procedure analogous to the previous Algorithm 1 with the difference that a service s is passed as input parameter, and the goal is to find the data for which it could be used

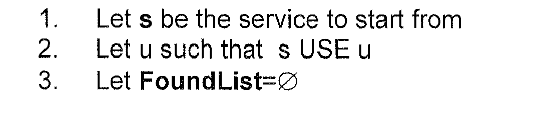

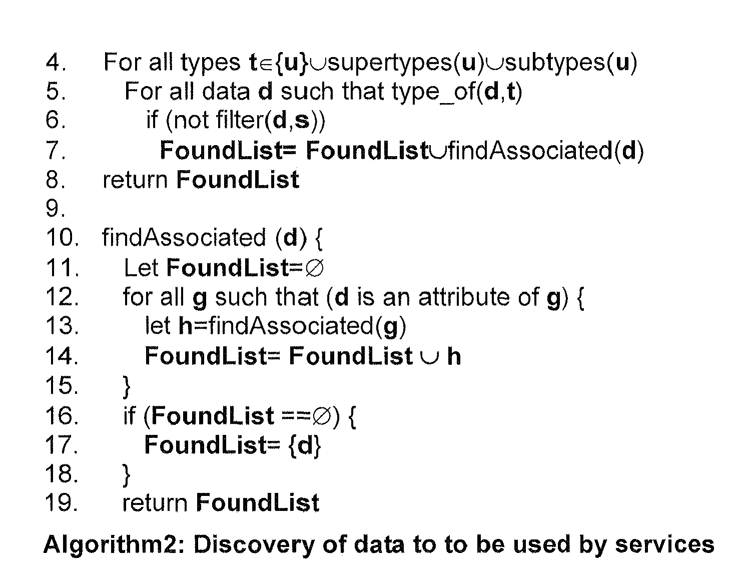

The second type of matching, which is shown in details by the Algorithm 2, maps a service to the data following the associate relations in the opposite directions. More in details, the algorithm starts from a service **s** (line 1) that is in a USE relation with a type **u** (line 2) and establishes a storage variable **FoundList** (line 3). In Line 4 starts the search that for each super and subtype of the type **u** and for each data instance of those types (line 5), if the data is not filtered out (line 6) a call to the procedure findAssociated is issued to find the data that is associated with the type (line 7) and its results added to **FoundList** removing all duplicates (line 8). The procedure findAssociated is defined in lines 10 to 19. The goal of this procedure is to follow all the attribute relations in the inverse direction to find the data that originally introduced a given data **d.** As an example, a given object app of type appointment may have an attribute location to be a given locations identified by the object office, then starting from the object office and following the attribute location in the inverse direction it is possible to return to the object app. The skilled person has multiple ways to implement this inversion among which she may maintain a table that given some data **d** retrieves all data **g** of which **d** is an attribute. More in details, the procedure findAssociated defines a storage variable **FoundList** (line 11) and then starting from the input data **d** looks for all the objects **g** of which **d** is an attribute (line 12). If such an object it is found, then the list of all objects that can be found by applying findAssociated starting from **g** is collected (line 13) and added to the contents of **FoundList** (line 14). Next it is verified if the **FoundList** is empty. When this is the case, that means that the data **d** is not the attribute of any object, and therefore it is added to **FoundList** and the content of the variable is returned.

According to one embodiment the addition of the data **d** to the result list is performed independent of whether the **FoundList** is empty. This can be achieved by canceling the line 16 in the bove algorithm, i.e. the addition of the data d to the result is performed independent of whether the result list so far is empty or not.

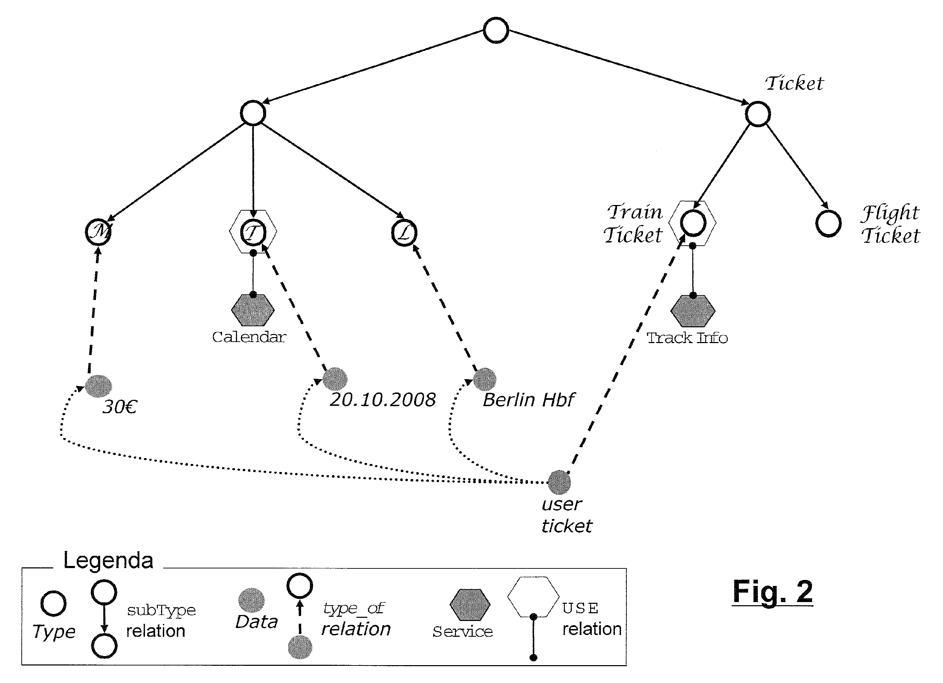

Now a more concrete example of an embodiment implementing such an algorithm will be described in connection with Fig. 2.

This embodiment described in connection with Fig. 2 provides two use-cases for algorithm 2. The first use case assumes that the user has already a train ticket to Berlin for the 20.10.2008 costing him 30€. In the first use case, upon arriving at the train station, the mobile phone of the user detects that there is a service that reports track information (Track Info service) whose declared use is the type Train Ticket. Applying Algorithm, line 2 extracts the service use, namely Train Ticket. Line 4 and 5 perform the search for relevant data in the type Train Ticket or in its super and sub types. The *user ticket,* being an instance of Train Ticket, is found among the data found. Assuming that *user ticket* is not filtered out in line 6, a search for the data that is associated with it is triggered in line 7 through the invocation of findAssociated. Finally, in line 8, all data found will then be returned as candidate data for the newly found Track Info service. The computation of the associated data in this case is very simple. Line 12 looks for all data **g** of which *user ticket* is an attribute. Since none of such data is found, the loop between lines 12 and 15 are never performed, and as a result the condition (**FoundList** ==∅) in line 16 holds. In line 17 *user ticket* is added to **FoundList** and the result is finally returned in line 19 by reporting that {*user ticket*} is the set of data found.

For a second use case, assume that the user is provided with new calendar service, in this case the calendar specifies that its use is Time objects. In this case, the search for relevant data is equivalent to the previous case, specifically, first the procedure looks for all data of type Time or of its super or sub types. As a result the date *20.10.2008* is found among possibly other data. Assuming that the data is not filtered in line 6, in line 7 the search for all associated data is triggered. This time findAssociates is invoked on the parameter *20.10.2008*.

Line 12 looks for all **g** of which the date *20.10.2008* is an attribute, and, of course, *user ticket* is found. Line 13 recursively invokes findAssociates on *user ticket* and its result, as shown above, is the set {*user ticket*}, which is assigned to h. In line 14, **h** contents are added to **FoundList** with the result that at this point its content is *{user ticket*}. Of course, the condition (**FoundList** ==∅) in line 16 does not hold, and the content of **FoundList** is returned in line 19.

According to one embodiment the search performed in line 12 of the above algorithm is not such that it is search for those types which have data d as an attribute, but for such types which have the type of data d as an attribute. E.g. if the data d is a time (like Oct. 20, 2008), then there is search for other types which have as an attribute the type "time". In this case line 12 of the algorithm above may read as follows:
all **g** such that (typeof(**d**) is an attribute of **g**) {

According to a further embodiment there is search for such types (and/or their correspondingobjects stored on the system) which have as an attribute eitehr the data d itself or the ype of data d. In this case line 12 of the algorithm above may read as follows:
all **g** such that (**d** or typeof(**d**) is an attribute of **g**) {
It should be noted here that in the algorithms described above there are searched all subtypes and supertypes. According to one embodiment the search in the first algorithm is made only for supertypes, because only for them it can be sure that the services associated with supertypes actually can use also the type of data which has been used as input for the algorithm, while for subtypes this is not necessarily the case. However, according to one embodiment the algorithm -.as shown above - also searches subtypes to make sure that no services which may possibly be used are left out of the screening procedure. A filtering algorithm (which will be described later and which is mentioned above as "filter" can be used to weed out such services which actually would not work on the input data object.

In the following the filter algorithm according to one embodiment will be described in somewhat more detail.

The usage relation specify what a service can be used for, but it does not specify how to invoke the service. Ultimately, the usage relation should be transformed in the inputs and outputs expected by the service. To achieve this task, one may define lowering functions from the "Use" specification to the inputs of the service, in a way that is equivalent to the inputs lowering functions in SAWSDL (see e.g. Joel Farrell, and Holger Lausen "Semantic Annotations for WSDL and XML Schema -W3C Recommendation 28 August 2007" Available at http://www.w3.org/TR/sawsdl/; Last viewed on October 1st 2008). Specifically, given a service s, let I be the inputs of service s and U be the specified usage of the service; we define the lowering function for the service: lowerₛ:Uₛ → Iₛ which specifies how data that is defined consistently with Uₛ can be transformed in the set of inputs Iₛ required by the service. For example, given an appointment the lowering function may specify how to extract the location and format it in a way that can be processed by a routing service.

Such Lowering functions can then also be used as filters of the discovering mechanism ( as used in algorithms 1 and 2 above) to find the services that can really be invoked from the available data. Specifically, given some data *d* and a lowering function lower*ₛ* defined for a given service *s*, if the application of lower*ₛ* succeeds in transforming *d* int inputs of *s* then *s* can be applied to *d*. and as a consequences it can be kept, if instead lower*ₛ* fails then *s* cannot be applied to *d* and *s* is removed from the list of services to propose.
In one embodiment lowering functions are specified at the time of service specification. Therefore when the programmer creates a service, she specifies the USE of the service by relating the service to a type, and, at the same time, she specifies how data of that type can be used to provide inputs to the service. The latter specification is done through the specification of the lowering function.

As has been explained already, the matching process can be implemented by the algorithms 1 and 2 defined above. Specifically, upon receiving a new data *d* the mobile phone can follow algorithm 1 to find all services that can be used in conjunction with this data. Conversely, upon finding a new service *s*, is discovered, algorithm 2 is used to discover all data to which the new service applies.

For example, upon receiving a flight ticket, algorithm 1 will find services such as the calendar to record the time of flight, or e-wallet to store the ticket and to record the payment, and navigation for going to the airport. Furthermore, upon entering the airport and discovering that there is a gate information service available, algorithm 2 would automatically discover that the service can be used in conjunction with the user's flight ticket.

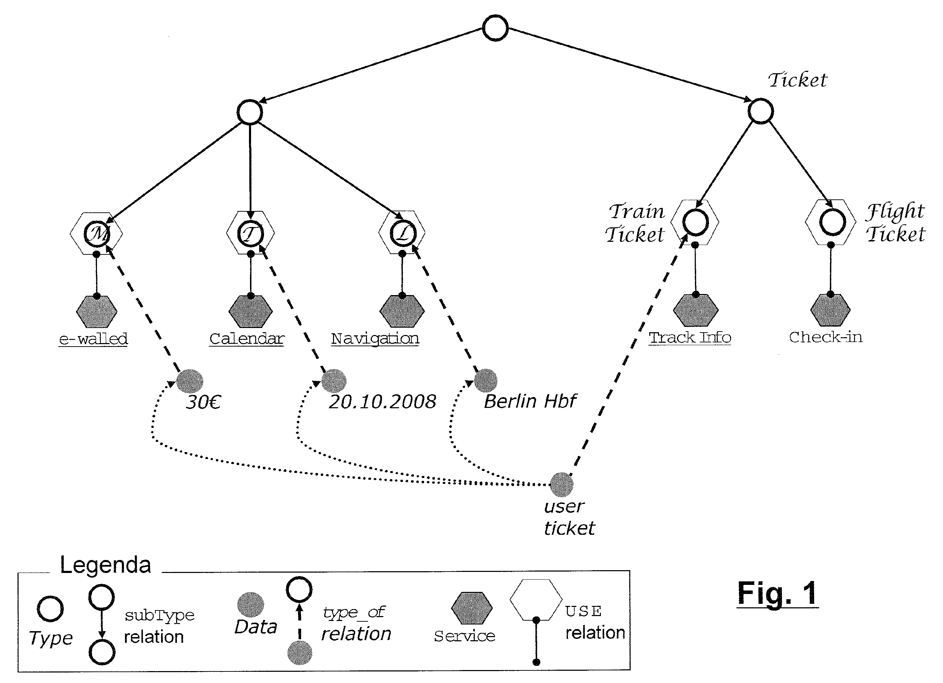

In the following there will be described in somewhat more detail an embodiment of the discovery mechanism in connection with Fig. 1 In the figure, the circles represent the types that are available in the user's system, and the down links between the circles represent the subType/superType relation between the different types. Furthermore, the circles may have a label either on the circle itself, or next to it when the label is too long. To this extent, on the left side of the figure are depicted three nodes, the first of which has a label *M* that corresponds to a type *Money*, the second with label *T* that corresponds to a type *Time*, and the third with label *L* that corresponds to a type *Location;* on the left side there are three nodes labeled *Ticket, Train Ticket*, and *Flight Ticket* representing different types of tickets that are known to the system.

In addition to the types, Fig. 1 shows the services that are known to the user (and advertised as described before). In the figure, services are represented as filled gray labeled hexagons; specifically in the figure are the following services are shown: e-wallet, Calendar, Navigation, Track Info, **and** Check-in. Services advertise themselves as to be used in conjunction with types, such advertisement is represented by empty hexagons overlapping on the corresponding types; as shown in the figure the e-wallet service is used in conjunction with data of type *Money*, the Calendar with data of type *Time*, the Navigation with data of type *Locatíon,* the Track Info with data of type *Traín Ticket, and* the check-in with data of type *Flight Tícket* respectively.

Data of the user is represented in Fig. 1 through labeled gray circles, which are linked to the corresponding types through a type_of relation. In the example, the user purchases a train ticket represented by the label *"User Ticket*" which is specified of type *grain Tícket*. *"User Ticket*" contains three attributes: the cost which is "30 €" specified of type *Money*, the date of travel "*20.10.2008*" of type *Time*; and the destination of the travel namely *"Berlin Hbf'* of type *Location*.

In the formalism outlined above, *"User Ticket*" is defined as the tuple <*30* €, *20.10.2008*, *Berlin>* corresponding to its attributes. When the ticket is added to the data of the user's data (e.g. by a SMS or though the internet after the user bought the ticket), Algorithm 1 is performed and specifically the first step is to compute the list of associated types to be stored in the variable **A.** Such computation is driven by the conditions specified in Definition 2 and specifically the type *Train Ticket* is added to **A** because it satisfies the first condition of the definition since it is the result of the classification of "*User Ticket",* while the types *Money, Time, Location* are added through the second condition because they are the types of the attributes of *"User Ticket".* The latter additions are computed through the recursive call defined in condition 2 of Definition 2 which leads to re-apply condition 1 of the definition on all the attributes retrieving their types. At the end of this computation the variable **A** contains the types *Train Ticket, Money, Time*, and *Location*.

The next step in the algorithm is the search through the type system. In this example, such a search is quite trivial since, for simplicity reasons, the type classification is underspecified. Nevertheless, through the loops defined in lines 5. and 6. of Algorithm 1 the services e-wallet, Calendar, Navigation, and Track Info, are found, and under the assumption that none of them is filtered, they are added to the FoundList and returned as discovered services. The discovery of the services is represented in Fig. 1 by the underline under the service labels. It can be seen that the service Check-in is not discovered because it is to be used with a type that is not recognized as associated with "*User Ticket*".

As an example of how some of the services may be filtered out in line 7 of Algorithm 1, consider the case of the destination of the ticket, namely *"Berlin Hbf"*. If the Naviagation service expects as input an address and no address is provided for *"Berlin Hbf'* then the service's lowering function will fail to map the location to the inputs of the service therefore Naviagation will be filtered out. In such case the FoundList contains only e-wallet, Calendar, and Track Info.

The embodiments of the invention may be implemented by any computing apparatus such as a PC or a mobile phone assuming that it is suitably programmed using the mechanisms described before.

Whereas the mechanisms described before not make any explicit assumptions on the software architecture of the mobile phone, there is an implicit assumption that the different applications can communicate with each other, or in one embodiment that all applications pool their data together in a common space. This is one possible implementation to allow the discovery mechanism to work. Indeed, it is clear that if the destination of a ticket is not available to other applications it would be impossible to find services that serve it.

A second implicit assumption is that there should be a common taxonomy of types. Indeed, if there were different types providing disjoined definitions of location in the phone, it would be impossible to discover services that handle all locations.

Still, violations of both assumptions are possible with gentle degradation of the system. Indeed, if applications maintain some of their data private, it may not be available for discovery, still the data that they make available it would be. Similarly, if there were on the phone two different definitions of location, then the discovery algorithm may find only some of the location services at any given time, instead of all of them.

The concrete implementations of the mechanisms described before can be performed in different ways. Especially one may implement the algorithm in two different ways which both have been implemented in test versions. The first implementation uses the of OWL inference engine which computes the classify function. As a consequence the loop starting at line 5 Algorithms 1 and 2 can be reduced to a query for all services s such that use(*s*)>classify(*d*) and classify(*d*)> use(s) where > represents the "more general class" relation. The advantage of this implementation is that it always correct, but it suffers from the need to do two potentially expensive queries.

A second implementation can be based on a preprocessing which for each named class in the type system identifies the services that can be used to process that class. Specifically, for each service *s*, one identifies the usage *u* of the service and then one records the correspondence (*u* X *s*) as well as the correspondence (*c* X *s*) for each class *c* such that either *c*<*u* or *u*<*c*. The matching is then reduced to a table lookup where the services found are the one for which holds (classify(*d*) X *s*).

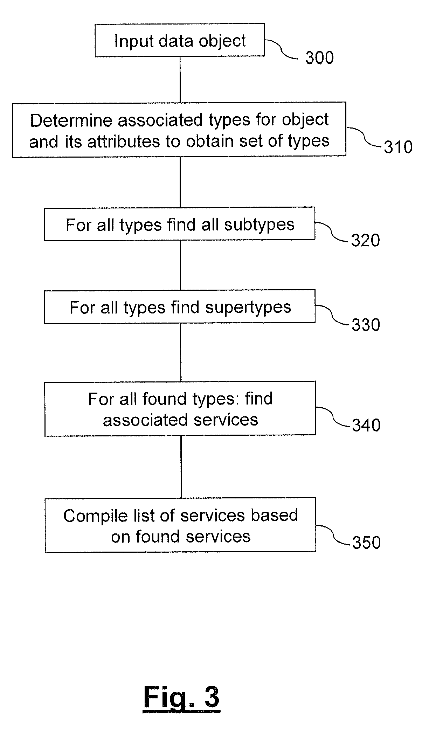

While in the embodiments described before there have been described rather concrete and specific embodiments, in the following there will be described a further embodiment which is somewhat more generic in connection with Fig. 3.

In operation 300 a data object is inputted which belongs to a taxonomy and has one or more attributes also belonging to a taxonomy.

In operation 310 there are determined an associated set of types which includes the type of the object itself as well as the types of its attributes. This operation may be recursively performed also for the attributes of the types of the attributes, until there are reached types which themselves have no further attributes. The resulting list of types are the "associated types" of the inputted data object.

In operation 320 (which is optional but included in this embodiment) there are then found all supertypes of the types which are included in the list of associated types which were determined in operation 310.

In operation 330 (which also is optional but included in this embodiment) there are then found all subrtypes of the types which are included in the list of associated types which were determined in operation 310.

Then in operation 340 there are determined for all types which have been found the services which can operate on the found types. These found services are then in operation 350 compiled in a final result list which includes the services which have been found and which may operate on or use the inputted data object.

Optionally there may be included a filtering operation which filters the found services based on a check whether they may indeed operate on the inputted data or not. This may be implemented by a lowering function as described in connection with a previous embodiment.

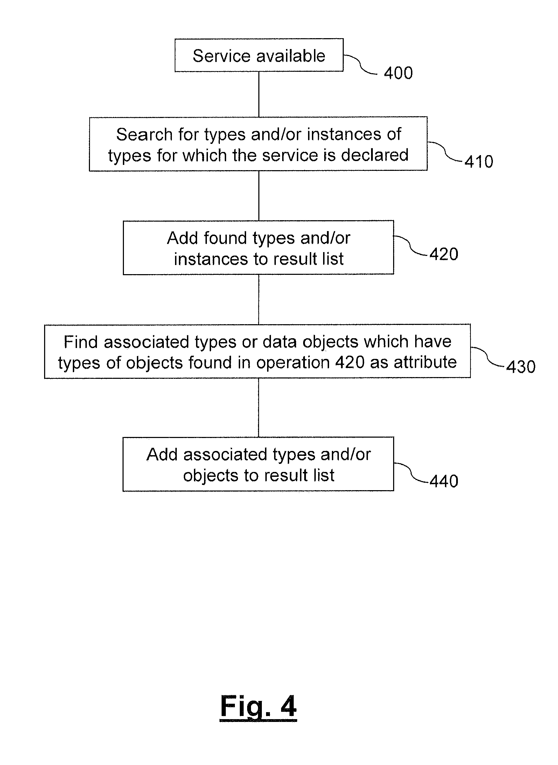

Now there will be described in connection with Fig. 4 an embodiment which finds the data which can be used by a given service (e.g. a newly installed service or a service which is suddenly available in a certain area).

In operation 400 the service becomes available.

In operation 410 there is determined for which data types the service is declared. These types and/or their instances (data objects being of this type) can then be added to the result list of data which can be used by the service. E.g. there is searched among the stored data for those data objects the type of which belongs to the one or more types for which the service is declared.

In operation 420 the found types and/or their instances (the data objects) are aded to the result set which comprises the types and/or the data objects being of the types for which the service is declared.

In operation 430 then there is search for the so-called "assodiated types" and/or or "associated data objects". These are those types or data objects which have one or more of the the data types or instances found in operation 420 as an attribute.

In operation 440 the associated types and/or instances are added to the result list.

In one embodiment the operations 430 and 440 (find associated types/objects) are also carried out for the supertypes of the types for which the service is declared. According to an even further embodiment they are also carried out for the subtypes of the types for which the service is declared.

The types for which a service is declared may according to one embodiment be taken from the advertisment of the service. The service may by some declaration or definition inform the system about which types of data it can handle. Then based thereupon the method described in connection with Fi. 4 may be executed.

According to one embodiment for all found types there is checked whether the data can used by the service. This can be done by checking whether non of the filters (such as the lowering functions described before) apply. Essentially this is a check whether the service indeed can use the data type which has been found. If the lowering function works, this means that the data type which was found can be used by the service.

If this is the case, then the data type is added to the final list of data types and/or objects which can be used by the service.

The checking procedure is optional, it may be omitted but this may then lead to more errors when trying to used the data of the final result list.

After having described embodiments of the invention there will now described some effects and advantages of these embodiments compared to the prior art. At first the comparison will be made with detecting application types based on MIME types.

A first difference is that the embodiments of the invention carry out a search that given a piece of data automatically finds the applications that can process it, or, in the other direction, that given an application finds all data to which it applies. Defining a search means that even when the application that handles a given type is not specified, the algorithms described before find one if one such an application is available and it is appropriately specified. As an example, an airline company, such as Lufthansa, may associate the extension ".Ih" to airline tickets, and the user may associate this extension to "Microsoft Word". If a new word processing application, such as "OpenOffice" is downloaded on the user's computer, although it could open files of type ".Ih" it will not be offered to the user. Furthermore, if the user buys a new airline ticket from another company, say Alitalia, which as extension ".az" none of the applications used for ".Ih" files will be offered despite the fact that objects of type ".az" and ".Ih" contain the same type of information. On the other hand the mechanism according to an embodiment of this invention would automatically relate both word processors to both types of files by recognizing that ".az" and ".Ih" files represent both airlines tickets (because airline ticket is a supertype of both types) and therefore all services that apply to airlines tickets are potentially valid services.

Moreover, the use of a table, as in the case of the Mime type system described above, is not sensitive to the content of the file. Specifically, the association between a file type and the applications always result in the same set of applications independently of what is the content of the information in the file. On the other hand, the search algorithm according to an embodiment of the invention does not work only on the declared type of file (or the type of data), but also on its content, because it also involves the attributes of the data object (its components). Therefore a file, such as an airline ticket, containing date information may be associated to a calendar independently of the declared type of the file. This is not possible when there is a fixed relation between applications and types.

It is therefore clear that the search process according to the described embodiments provides functionalities that cannot be matched by the use of fix tables like the ones that are used to match Mime types and applications in computer operating systems and e.g. mail clients.

In addition to the approaches described above, the problem of associating a service to some data can be seen as the problem of associating a computer function to the data. In this case, the problem that the invention addresses has some similarity with the problem of associating methods to data in object-oriented systems. In these systems, data is organized on the bases of type taxonomies, and methods are associated to the different types. Given a piece of data of a given type, all methods that are designed for that type or for more general types are applicable, and given a call x.m, where x is some data and m is a method, the more specific definition of m is retrieved and applied to x. Although method search in object oriented systems may be regarded as bearing some similarity with the search proposed in this patent, however, there are fundamental differences.

First of all the search in object-oriented systems is performed only upward looking at the more general types and it stops as soon as the first definition of a method is found. On the opposite, in an embodiment of the present invention there is also allow also search "downwards" looking in the most specific types, in one embodiment under the restriction that the service found is applicable with the information available.

A second difference is that in object-oriented systems a programmer specifies what method applies at a given time, and the search is performed only for that specific method rather than looking for all methods that are applicable. On the other hand, in an embodiment of the invention there is performed a search for all services that are applicable. Moreover, the described search may recognize methods that are loaded dynamically during the execution of the program. The mechanism according to an embodiment of the invention can work at execution time when new services and new data becomes available.

A third difference is that the search in object-oriented systems does not look at the content of the data looking for additional functions that process only part of the data. For example, an object-oriented system may have a type for *AirlineTicket* and it may search all functions that apply to data of that type. Yet, one component of *AirlineTicket* may be the time of travel and as such calendaring methods may be applicable. Yet, such methods will be on a different branch of the taxonomy and therefore they cannot be found. On the other hand the mechanism according to an embodiment of the invention would find such calendaring methods due to the associated type list which is generated and checked for their associated services.

The mechanism according to an embodiment of the invention therefore provided a mechanism for controlled extensions toward both more specific types as well as types that are on other unrelated branches of the type or taxonomy tree.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a computer, a PDA, a mobile phone, a smartphone, or anything alike.

## Claims

1. A computer implemented method for detecting for a certain data object the services which can use said data object as an input, wherein said method comprises:
providing a taxonomy of types, said taxonomy being hierarchical such that a type can have supertypes and subtypes;
receiving a data object having a type belonging to said taxonomy, said data object further having one ore more attributes as components of said data object, said attributes also being of a type which belongs to said taxonomy;
obtaining the data type of said data object and the data type of said one or more attributes and compiling them in a list of associated types which are associated with said data object;
for all of the types in said list of associated types, obtaining the services which can operate on said types to obtain a list of services which can operate on the inputted data.

2. The method of claim 1, further comprising:
for all data types in the list of associated types, find their corresponding supertypes in the taxonomy and their associated services to add them to the resulting list of services.

3. The method of claim 1 or 2, further comprising:
for all data types in the list of associated types, find their corresponding subtypes in the taxonomy and their associated services to add them to the resulting list of services.

4. The method of one of the preceding claims, further comprising:
apply a filtering function to the found services which checks whether for the found service the data can indeed by an input, and if not, remove the corresponding service from the resulting services list.

5. A computer implemented method for detecting for a certain service those stored data objects which can be used by said service as an input, wherein said method comprises:
providing a taxonomy of types, said taxonomy being hierarchical such that a type can have supertypes and subtypes, wherein a plurality of data objects are stored on said computer and said data object further having one ore more attributes as components of said data objects, said attributes also being of a type which belongs to said taxonomy; said method further comprising:
for each of the the one or more types of data for which said service is declared, finding their set of associated data objects, wherein finding the associated data objects comprises:
finding those data objects among the stored data which have as an attribute at least one of the data types or the instance of a data type for which the service is declared, an attribute being a component of a stored data object; said method further comprising:
adding the found data objects to the result set of data objects which can be used as an input by said service.

6. The method of claim 5, further comprising:
for all data types for which the service is declared,, find their corresponding supertypes in the taxonomy, and
for each of the sound supertypes, find its set of associated data objects and add it to the result list.

7. The method of claim 5 or 6, further comprising:
for all data types for which the service is declared, find their corresponding subtypes in the taxonomy, and for each of the found subtypes, find its set of associated data objects and add it to the result list.

8. The method of one of claims 5 to 7, further comprising:
applying a filtering function to the found data objects which checks whether for the given service the found data objects can indeed by an input, and if not, do not include the corresponding data objects in the resulting data objects list.

9. An apparatus for detecting for a certain data object the services which can use said data object as an input, wherein said apparatus comprises:
a module for providing a taxonomy of types, said taxonomy being hierarchical such that a type can have supertypes and subtypes;
a module for receiving a data object having a type belonging to said taxonomy, said data object further having one ore more attributes as components of said data object, said attributes also being of a type which belongs to said taxonomy;
a module for obtaining the data type of said data object and the data type of said one or more attributes and compiling them in a list of associated types which are associated with said data object;
a module for obtaining for all of the types in said list of associated types the services which can operate on said types to obtain a list of services which can operate on the inputted data.

10. An apparatus for detecting for a certain service those stored data objects which can be used by said service as an input, wherein said apparatus comprises:
a module finding for each of the the one or more types of data for which said service is declared, their set of associated data objects, wherein finding the associated data objects comprises:
finding those data objects among the stored data which have as an attribute at least one of the data types or the instance of a data type for which the service is declared, an attribute being a component of a stored data object; said apparatus further comprising:
a module for adding the found data objects to the result set of data objects which can be used as an input by said service.

11. The apparatus of claim 9 or 10, further comprising:
a module for implementing the operations defined in one of claims 2 to 4 or 6 to 8.

12. A computer program comprising computer program code which when being executed on a computer enables said computer to carry out a method according to one of claims 1 to 8.
